# EUROPÄISCHE PATENTSCHRIFT

(11) **EP 0 798 108 B1**
(45) Veröffentlichungstag und Bekanntmachung des Hinweises auf die Patenterteilung: **07.05.2003**
(21) Anmeldenummer: 97890057.9
(22) Anmeldetag: 26.03.1997
(51) Int. Cl.: B32B 3/26, B32B 7/12, B65D 77/20

(54) **Deckelelement für Verpackungen sowie Verfahren zu dessen Herstellung**
Cover por packaging and method producing the same
Couvercle pour emballage et procédé pour sa fabrication

(30) Priorität: 29.03.1996 AT 57896
(43) Veröffentlichungstag der Anmeldung: 01.10.1997
(73) Patentinhaber: TEICH AKTIENGESELLSCHAFT, 3200 Obergrafendorf (AT)
(72) Erfinder: Reiterer, Franz, Ing., 3052 Neustift-Innermanzing (AT)
(74) Vertreter: Dungler, Karin

(56) Entgegenhaltungen:
- EP-A- 0 383 989
- WO-A-96/25254
- DE-A- 4 240 373
- DE-U- 29 700 263
- GB-A- 2 298 391
- US-A- 3 785 899

## Beschreibung

Die Erfindung betrifft ein Deckelelement für Verpackungen sowie ein Verfahren zu dessen Herstellung.

Es ist bekannt, Verpackungen wie beispielsweise Joghurtbecher mit einseitig bedruckten Deckelelementen aus Aluminium zu verschliessen, welche verpackungsgutseitig mit einem Heißsiegellack (Hot-melt) versehen sind. Zur Herstellung dieser Deckelelemente wird auf der dem Verpackungsgut zugewandten Seite der als Rollenware vorliegenden Aluminiumfolie kontinuierlich die Heißsiegelackschicht aufgebracht und anschließend auf der dem Verpackungsgut abgewandten Seite bedruckt. Der bedruckte Folienverbund wird anschließend beidseitig geprägt, in die Form der Deckelelemente gestanzt, welche als Stapel lieferbar sind. Durch die geprägte Oberflächenstruktur kann der Stapel für die Weiterverwendung der Deckelelemente leicht vereinzelt werden. Der Prägevorgang hat jedoch den Nachteil, daß das Druckbild verzerrt oder sogar zerstört wird.

Aufgabe der Erfindung ist es nun, diesen bekannten Nachteil zu vermeiden und gleichzeitig leicht handhabbare Deckelelemente für Verpackungen bereitzustellen.

Erfindungsgemäß wird daher ein Deckelelement der eingangs genannten Art vorgeschlagen, welches im wesentlichen aus einer geprägten und einer ungeprägten Folie besteht, wobei die geprägte Folie dem Verpackungsgut zugewandt und verpackungsgutseitig mit einer Heißsiegelbeschichtung versehen ist. Dabei ist die ungeprägte Folie verpackungsgutseitig über eine Kleberschicht mit der geprägten Folie verbunden und kann vorteilhafterweise an ihrer dem Verpackungsgut abgewandten Seite bedruckt sein.

Ein weiterer Vorteil des erfindungsgemäßen Deckelelements besteht darin, daß die ungeprägte Folie an ihrer dem Verpackungsgut abgewandten Seite eine Lackschicht aufweist, auf welcher ein Druckmotiv vorliegt.

Das erfindungsgemäße Deckelelement ist ferner dadurch gekennzeichnet, daß die Materialien für die geprägte und die ungeprägte Folie in ihrer Reihenfolge ausgehend vom Verpackungsgut gemäß folgender Materialkombinationen vorliegen: Aluminium/Aluminium, Aluminium/Kunststoff, Kunststoff/Aluminium, Kunststoff/Kunststoff, Aluminium/Papier, Papier/Aluminium, Aluminium/Papier, Papier/Papier, Aluminium/Stahl, wobei die Kunststoffe aufweisenden Materialkombinationen vorzugsweise solche auf Basis von Polypropylen, Polyethylen, Polyamid oder Polyethylenterephthalat sind.

Ein weiterer Vorteil des erfindungsgemäßen Deckelelements besteht darin, daß bei Aluminium enthaltenden Materialkombinationen die geprägte Folie aus einem weich geglühten Aluminium mit einer Zugfestigkeit von 50 bis 130 N/mm² und die ungeprägte Folie aus hartem Aluminium mit einer Zugfestigkeit von 130 bis 250 N/mm² besteht.

Ferner betrifft die Erfindung ein Verfahren zur Herstellung des erfindungsgemäßen Deckelelements, wobei
a) zur Ausbildung der geprägten Folie diese zuerst in nichtgeprägter Form an einer Folienseite mit einer Heißsiegelbeschichtung versehen und anschließend einem Prägeschritt unterworfen wird und
b) die ungeprägte Folie mit einer Kleberschicht versehen wird, ferner
c) die gemäß a) und b) hergestellten Folienbahnen über eine an der ungeprägten Folie aufgetragenen Kleberschicht miteinander verbunden werden und wobei gegebenenfalls auf der ungeprägten Folie an ihrer dem Verpackungsgut abgewandten Seite ein Druckmotiv angebracht wird.

Ferner ist das erfindungsgemäße Verfahren dadurch gekennzeichnet, daß
a) zur Ausbildung der geprägten Folie diese zuerst in nichtgeprägter Form an einer Folienseite mit einer Heißsiegelbeschichtung versehen und anschließend einem Prägeschritt unterworfen wird, daß
b) die ungeprägte Folie auf einer Oberflächenseite mit einer Kleberschicht und gegebenenfalls auf der anderen Oberflächenseite mit einem Druckmotiv versehen wird und daß
c) die gemäß a) und b) hergstellten Folienbahnen über die an der ungeprägten Folie angebrachten Kleberschicht miteinander verbunden werden.

Ein Vorteil des erfindungsgemäßen Verfahrens liegt darin, daß auf der ungeprägten Folie an ihrer dem Verpackungsgut abgewandten Seite eine Lackschicht aufgetragen wird, auf welcher in der Folge ein Druckmotiv angebracht wird.

Das erfindungsgemäße Verfahren zur Herstellung eines Deckelelements ist ferner dadurch gekennzeichnet, daß die Materialien für die geprägte und die ungeprägte Folie in ihrer Reihenfolge ausgehend vom Verpackungsgut aus folgenden Materialkombinationen ausgewählt werden: Aluminium/Aluminium, Aluminium/Kunststoff, Kunststoff/Aluminium, Kunststoff/Kunststoff, Aluminium/Papier, Papier/Aluminium, Aluminium/Papier, Papier/Papier, Aluminium/Stahl, wobei bei Kunststoffe aufweisenden Materialkombinationen solche auf Basis von Polypropylen, Polyethylen, Polyamid und Polyethylenterephthalat ausgewählt werden.

Ein weiterer Vorteil des erfindungsgemäßen Verfahrens besteht darin, daß bei Aluminium enthaltenden Materialkombinationen für die geprägte Folie weich geglühtes Aluminium mit einer Zugfestigkeit von 50 bis 130 N/mm² und für die ungeprägte Folie hartes Aluminium mit einer Zugfestigkeit von 130 bis 250 N/mm² eingesetzt werden.

Die Erfindung wird nun anhand einer schematischen Darstellung sowie eines Ausführungsbeispieles näher erläutert.

In der schematischen Darstellung wird das erfindungsgemäße Deckelelement 1 gezeigt, welches im wesentlichen aus der geprägten Folie 2 und der ungeprägten Folie 3 besteht. Die geprägte Folie 2 weist an ihrer dem Verpackungsgut zugewandten Seite 2' die Heißsiegelbeschichtung 4 auf. Die ungeprägte Folie 3 weist an ihrer dem Verpackungsgut zugewandten Seite 3' die Kleberschicht 5, welche zur Verklebung der Folien 2 und 3 dient, und auf ihrer dem Verpackungsgut abgewandten Seite 3" das Druckmotiv 6 auf. Zur besseren Haftung des Druckmotives 6 auf der Folie 3 wird dieses vorzugsweise auf einer Druckvorlackschicht 7 aufgebracht.

Das erfindungsgemäße Deckelelement kann nunmehr beispielsweise wie folgt hergestellt werden:

Auf einer weich geglühten Aluminiumfolie mit einer Zugfestigkeit von 70 N/mm² wird kontinuierlich eine Heißsiegelbeschichtung 4 aufgetragen, welche anschließend einem Prägewalzenpaar zugeführt wird, sodaß die geprägte Folie 2 mit einer an der Oberflächenseite 2' angebrachten Heißsiegelbeschichtung 4 ausgebildet wird.

In einem weiteren Arbeitsschritt wird eine harte Aluminiumfolie mit einer Zugfestigkeit von 200 N/mm² beidseitig beschichtet, wobei an der Folienseite 3' die Kleberschicht 5 und an der Folienseite 3" die Druckvorlackschicht 7 aufgetragen werden.

Anschließend erfolgt über die Kleberschicht 5 die Ausbildung eines Folienverbundes, welcher nach an sich bekannten Druckverfahren wie beispielsweise einem Tiefdruck- oder Flexodruckverfahren mit dem Druckmotiv 6 versehen wird. Das in Rollenware vorliegende Deckelelement 1 wird nun in die gewünschte Form gestanzt und aufgestapelt.

Ferner ist es möglich, die angeführte beispielhafte Verfahrensdarstellung dahingehend abzuändern, daß die harte Aluminiumfolie 2 vorerst mit dem Druckvorlack 7 beschichtet und anschließend mit dem Druckmotiv 6 versehen wird und daß in einem weiteren Arbeitsschritt die Kleberschicht 5 aufgetragen wird.

Das erfindungsgemäße Deckelelement kann zum Verschließen von Verpackungsgut wie beispielsweise Joghurtbechern verwendet werden.

Es weist ferner ein in optischer Hinsicht zufriedenstellendes Druckmotiv auf, da die bedruckte Folie keinem Prägeschritt, welcher zu einer Verzerrung oder sogar Zerstörung des Druckmotivs führen könnte, unterworfen worden ist.

Dennoch ist die gute Handhabbarkeit des Deckelelementes bei dessen Weiterverwendung in der Verpackungsgutherstellung dadurch gewährleistet, daß die dem Verpackungsgut zugewandte Folie eine geprägte Folie ist. Dadurch können die im Stapel angelieferten Deckelelemente vor deren Weiterverwendung leicht vereinzelt werden.

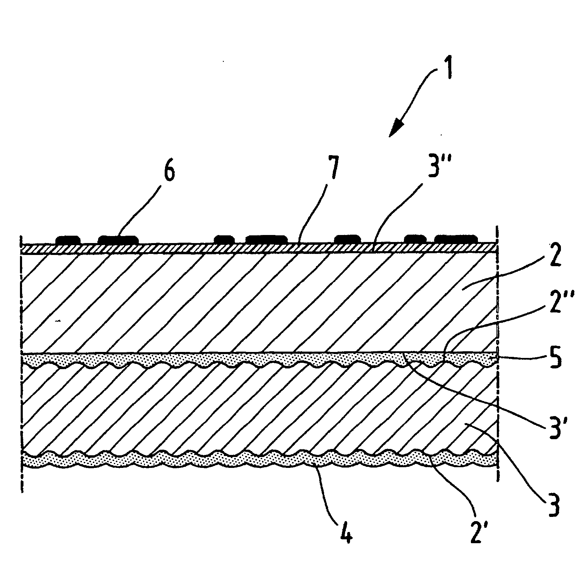

## Patentansprüche

1. Deckelelement für Verpackungen bestehend im wesentlichen aus einer geprägten und einer ungeprägten Folie, wobei die geprägte Folie dem Verpackungsgut zugewandt und verpackungsgutseitig mit einer Heißsiegelbeschichtung versehen ist und wobei die ungeprägte Folie verpackungsgutseitig über eine Kleberschicht mit der geprägten Folie verbunden ist.

2. Deckelelement nach Anspruch 1, **dadurch gekennzeichnet, daß** die ungeprägte Folie an ihrer dem Verpackungsgut abgwandten Seite bedruckt ist.

3. Deckelelement nach Anspruch 1 oder 2, **dadurch gekennzeichnet, daß** die ungeprägte Folie an ihrer dem Verpackungsgut abgewandten Seite eine Lackschicht aufweist, auf welcher ein Druckmotiv vorliegt.

4. Deckelelement nach einem der Ansprüche 1 bis 3, **dadurch gekennzeichnet, daß** die Materialien für die geprägte und die ungeprägte Folie in ihrer Reihenfolge ausgehend vom Verpackungsgut gemäß folgender Materialkombinationen vorliegen: Aluminium/Aluminium, Aluminium/Kunststoff, Kunststoff/Aluminium, Kunststoff/Kunststoff, Aluminium/Papier, Papier/Aluminium, Aluminium/Papier, Papier/Papier, Aluminium/Stahl.

5. Deckelelement nach Anspruch 4, **dadurch gekennzeichnet, daß** die Kunststoffe aufweisenden Materialkombinationen solche auf Basis von Polypropylen, Polyethylen, Polyamid und Polyethlyenterephthalat sind.

6. Deckelelement nach Anspruch 4 oder 5, **dadurch gekennzeichnet, daß** bei Aluminium enthaltenden Materialkombinationen die geprägte Folie aus einem weich geglühten Aluminium mit einer Zugfestigkeit von 50 bis 130 N/mm² und die ungeprägte Folie aus hartem Aluminium mit einer Zugfestigkeit von 130 bis 250 N/mm² besteht.

7. Verfahren zur Herstellung eines Deckelelements nach einem der Ansprüche 1 bis 6, **dadurch gekennzeichnet, daß**
a) zur Ausbildung der geprägten Folie diese zuerst in nichtgeprägter Form an einer Folienseite mit einer Heißsiegelbeschichtung versehen und anschließend einem Prägeschritt unterworfen wird und daß
b) die ungeprägte Folie mit einer Kleberschicht versehen wird, daß
c) die gemäß a) und b) hergstellten Folienbahnen über eine an der ungeprägten Folie aufgetragenen Kleberschicht miteinander verbunden werden und daß gegebenenfalls auf der ungeprägten Folie an ihrer dem Verpackungsgut abgewandten Seite ein Druckmotiv angebracht wird.

8. Verfahren zur Herstellung eines Deckelelements nach einem der Ansprüche 1 bis 6, **dadurch gekennzeichnet, daß**
a) zur Ausbildung der geprägten Folie diese zuerst in nichtgeprägter Form an einer Folienseite mit einer Heißsiegelbeschichtung versehen und anschließend einem Prägeschritt unterworfen wird,daß
b) die ungeprägte Folie auf einer Oberflächenseite mit einer Kleberschicht und gegebenenfalls auf der anderen Oberflächenseite mit einem Druckmotiv versehen wird, und daß
c) die gemäß a) und b) hergestellten Folienbahnen über die an der ungeprägten Folie angebrachten Kleberschicht miteinander verbunden werden.

9. Verfahren nach Anspruch 7 oder 8, **dadurch gekennzeichnet, daß** auf der ungeprägten Folie an ihrer dem Verpackungsgut abgewandten Seite eine Lackschicht aufgetragen wird, auf welcher in der Folge ein Druckmotiv angebracht wird.

10. Verfahren nach einem der -Ansprüche 7 bis 9, **dadurch gekennzeichnet, daß** die Materialien für die geprägte und die ungeprägte Folie in ihrer Reihenfolge ausgehend vom Verpackungsgut aus folgenden Materialkombinationen ausgewählt werden: Aluminium/Aluminium, Aluminium/Kunststoff, Kunststoff/Aluminium, Kunststoff/Kunststoff, Aluminium/Papier, Papier/Aluminium, Aluminium/Papier, Papier/Papier, Aluminium/Stahl.

11. Verfahren nach Anspruch 10, **dadurch gekennzeichnet, daß** bei Kunststoffe aufweisenden Materialkombinationen solche auf Basis von Polypropylen, Polyethylen, Polyamid und Polyethylenterephthalat ausgewählt werden.

12. Verfahren nach Anspruch 10 oder 11, **dadurch gekennzeichnet, daß** bei Aluminium enthaltenden Materialkombinationen für die geprägte Folie weich geglühtes Aluminium mit einer Zugfestigkeit von 50 bis 130 N/mm² und für die ungeprägte Folie hartes Aluminium mit einer Zugfestigkeit von 130 bis 250 N/mm² eingesetzt wird.

## Claims

1. A cover element for packagings, substantially comprising an embossed and a non-embossed foil, wherein the embossed foil is provided facing the goods to be packaged and on the packaged-goods side with a heat-sealed coating and wherein the non-embossed foil is joined on the packaged-goods side to the embossed foil via an adhesive layer.

2. A cover element according to Claim 1, **characterised in that** the non-embossed foil is printed on its side remote from the goods to be packaged.

3. A cover element according to Claim 1 or 2, **characterised in that** the non-embossed foil has on its side remote from the goods to be packaged a lacquer coating on which there is a printed motif.

4. A cover element according to any one of Claims 1 to 3, **characterised in that** the materials for the embossed and non-embossed foil are present in their order starting from the goods to be packaged in accordance with the following material combinations: aluminium/aluminium, aluminium/plastics/ plastics/aluminium, plastics/plastics, aluminium/paper, paper/aluminium, aluminium/paper, paper/paper, aluminium/steel.

5. A cover element according to Claim 4, **characterised in that** the material combinations having plastics materials are those based on polypropylene, polyethylene, polyamide and polyethylene terephthalate.

6. A cover element according to Claim 4 or 5, **characterised in that**, in the case of material combinations containing aluminium, the embossed foil consists of a soft annealed aluminium with a tensile strength of 50 to 130 N/mm² and the non-embossed foil consists of hard aluminium with a tensile strength of 130 to 250 N/mm².

7. A method of producing a cover element according to any one of Claims 1 to 6, **characterised in that**
a) to form the embossed foil it is initially provided in the non-embossed form with a heat-sealed coating on one foil side and, subsequently, it undergoes an embossing step, and **in that**
b) the non-embossed foil is provided with an adhesive layer, **in that**
c) the foil webs produced in accordance with a) and b) are joined together via an adhesive layer applied to the non-embossed foil and **in that**, optionally, a printed motif is applied to the non-embossed foil on its side remote from the goods to be packaged.

8. A method of producing a cover element according to any one of Claims 1 to 6, **characterised in that**
to form the embossed foil it is initially provided in the non-embossed form with a heat-sealed coating on one foil side and, subsequently, it undergoes an embossing step, **in that**
b) the non-embossed foil is provided on one surface side with an adhesive layer and, optionally, on the other surface side is provided with a printed motif and **in that**
c) the foil webs produced in accordance with a) and b) are joined together via the adhesive layer applied to the non-embossed foil.

9. A method according to Claim 7 or 8, **characterised in that** a lacquer coating is applied to the non-embossed foil on its side remote from the goods to be packaged, on which lacquer coating a printed motif is subsequently applied.

10. A method according to any one of Claims 7 to 9, **characterised in that** the materials for the embossed foil and the non-embossed foil are chosen in their order starting from the goods to be packaged from the following material combinations: aluminium/aluminium, aluminium/plastics, plastics/aluminium, plastics/plastics, aluminium/paper, paper/aluminium, aluminium/paper, paper/paper, aluminium/steel.

11. A method according to Claim 10, **characterised in that**, in the case of material combinations having plastics materials, those based on polypropylene, polyethylene, polyamide and polyethylene terephthalate are chosen.

12. A method according to Claim 10 or 11, **characterised in that**, in the case of material combinations for the embossed foil containing aluminium, soft annealed aluminium with a tensile strength of 50 to 130 N/mm² is used and for the non-embossed foil hard aluminium with a tensile strength of 130 to 250 N/mm² is used.

## Revendications

1. Elément de couvercle pour emballages, composé essentiellement d'une feuille gaufrée et d'une feuille non gaufrée, la feuille gaufrée étant tournée vers l'objet d'emballage et pourvue, côté objet d'emballage, d'une enduction thermo-soudable et la feuille non gaufrée étant reliée, côté objet d'emballage, à la feuille gaufrée, par l'intermédiaire d'une couche de colle.

2. Elément de couvercle suivant la revendication 1, **caractérisé en ce que** la face de la feuille non gaufrée côté opposé à l'objet d'emballage est imprimée.

3. Elément de couvercle suivant la revendication 1 ou 2, **caractérisé en ce que** la feuille non gaufrée présente une couche de laque sur la face côté opposé à l'objet d'emballage.

4. Elément de couvercle suivant une des revendications 1 à 3, **caractérisé en ce que** les matières pour la feuille gaufrée et pour la feuille non gaufrée sont présentes, dans l'ordre à partir de l'objet d'emballage, selon les combinaisons de matières suivantes: aluminium/aluminium, aluminium/matière artificielle, matière artificielle/aluminium, matière artificielle/matière artificielle, aluminium/papier, papier/aluminium, aluminium/papier, papier/papier, aluminium/acier.

5. Elément de couvercle suivant la revendication 4, **caractérisé en ce que** les combinaisons de matières contenant de la matière artificielle sont à base de polypropylène, de polyéthylène, de polyamide et de polyéthylène-téréphthalate.

6. Elément suivant les revendications 4 ou 5, **caractérisé en ce que** dans le cas de combinaisons de matières contenant de l'aluminium, la feuille gaufrée est en aluminium recuit doux avec une résistance à la traction comprise entre 50 et 130 N/mm² et la feuille non gaufrée est en aluminium dur avec une résistance à la traction comprise entre 130 et 250 N/mm².

7. Procédé de fabrication d'un élément de couvercle suivant une des revendications 1 à 6, **caractérisé en ce que**
a) pour la réalisation de la feuille gaufrée, celle-ci est d'abord, sous une forme non gaufrée, pourvue sur une face d'une enduction thermo-soudable, puis exposée à un gaufrage et **en ce que**
b) la feuille non gaufrée est pourvue d'une couche de colle, que
c) les bandes de feuille réalisées selon a) et b) sont reliées l'une à l'autre par l'intermédiaire d'une couche de colle appliquée sur la feuille non gaufrée et qu'un motif d'impression est appliqué, le cas échéant, sur la feuille non gaufrée, sur la face côté opposé au contenu de l'emballage.

8. Procédé de fabrication d'un élément de couvercle suivant une des revendications 1 à 6, **caractérisé en ce que**
a) pour la réalisation de la feuille gaufrée, celle-ci est d'abord, sous forme non gaufrée, pourvue d'une enduction thermo-soudable sur une face, puis exposée à un gaufrage, que
b) la feuille non gaufrée est pourvue sur une des surfaces d'une couche de colle et, le cas échéant, d'un motif d'impression sur l'autre surface et que
c) les bandes de feuille réalisées selon a) et b) sont reliées l'une à l'autre au moyen de la couche de colle appliquée sur la feuille non gaufrée.

9. Procédé suivant la revendication 7 ou 8, **caractérisé en ce que** sur la face, côté opposé à l'objet d'emballage, de la feuille non gaufrée, est appliquée une couche de laque, sur laquelle est ensuite appliqué un motif d'impression.

10. Procédé suivant une des revendications 7 à 9, **caractérisé en ce que** les matières pour la feuille gaufrée et la feuille non gaufrée sont choisies, dans l'ordre à partir de l'objet d'emballage, parmi les combinaisons de matières suivantes : aluminium/aluminium, aluminium/matière artificielle, matière artificielle/aluminium, matière artificielle/matière artificielle, aluminium/papier, papier/aluminium, aluminium/papier, papier/papier, aluminium/acier.

11. Procédé suivant la revendication 10, **caractérisé en ce que** dans le cas de combinaisons de matières contenant des matières artificielles, on choisit celles à base de polypropylène, de polyéthylène, de polyamide et de polyéthylène-téréphtalate.

12. Procédé suivant la revendication 10 ou 11, **caractérisé en ce que** dans le cas de combinaisons de matières contenant de l'aluminium, on utilise pour la feuille gaufrée de l'aluminium recuit doux avec une résistance à la traction comprise entre 50 et 130 N/mm² et pour la feuille non gaufrée, de l'aluminium dur avec une résistance à la traction comprise entre 130 et 250N/mm².
